# EUROPÄISCHE PATENTSCHRIFT

(11) **EP 1 921 956 B1**
(45) Veröffentlichungstag und Bekanntmachung des Hinweises auf die Patenterteilung: **09.06.2010**
(21) Anmeldenummer: 06778258.1
(22) Anmeldetag: 17.08.2006
(51) Int. Cl.: A47J 43/07, A47J 43/08

(54) **KÜCHENGERÄT MIT EINER SICHERHEITSFIXIERUNG ZUR VERRIEGELUNG EINER WERKZEUGKUPPLUNG**
KITCHEN APPLIANCE COMPRISING A SAFETY FIXTURE FOR LOCKING A TOOL COUPLING
USTENSILE DE CUISINE COMPRENANT UN ELEMENT DE FIXATION DE SECURITE POUR VERROUILLER UN ELEMENT DE COUPLAGE D'USTENSILE

(30) Priorität: 26.08.2005 DE 102005040523
(43) Veröffentlichungstag der Anmeldung: 21.05.2008
(73) Patentinhaber: BSH Bosch und Siemens Hausgeräte GmbH, 81739 München (DE)
(72) Erfinder: MAK, Marjan, 3303 Gomilsko (SI); PESEC, Jurij, 3301 Petrovce (SI); RUDEZ, Darko, 3230 Sentjur (SI)
(86) Internationale Anmeldenummer: PCT/EP2006/065403
(87) Internationale Veröffentlichungsnummer: WO 2007/023127

(56) Entgegenhaltungen:
- EP-A1- 0 682 904
- US-A- 2 929 477
- US-A- 3 211 480
- US-A- 5 368 384
- US-A- 5 979 850

## Beschreibung

Die Erfindung betrifft ein elektromotorisches Küchengerät, vorzugsweise elektromotorische Solo- oder Universalküchenmaschine, umfassend einen Elektromotor, mindestens ein Werkzeug, und mindestens eine Werkzeugkupplung zum Verbinden des Werkzeuges mit dem Küchengerät.

DE 691 01 451 T1 betrifft ein elektrisches Küchengerät mit mehreren Funktionen zum Bearbeiten von Lebensmitteln mit einer elektrischen Steuervorrichtung zum Einschalten des Motors, welche eine Detektor-Vorrichtung zur Feststellung der Anwesenheit eines Deckels auf einer Arbeitsschüssel aufweist. Die Detektor-Vorrichtung dient dazu, eine richtige Schließstellung des Küchengeräts zu überwachen sowie die richtige Arbeitsgeschwindigkeit in Abhängigkeit eines angeschlossenen Werkzeugs einzustellen. Die Detektorvorrichtung weist zur Feststellung der Anwesenheit einer Arbeitsschüssel bzw. eines Deckels einen Hall-Sensor auf, mit dem das Magnetfeld eines Magneten erfasst werden kann.

Aus der DE 31 21 252 ist ein Mehrzweck-Haushaltsgerät mit mehreren austauschbaren Nahrungsmittel-Zubereitungswerkzeugen und einer abnehmbaren Schale bekannt, welches eine magnetisch wirkende Sicherheitsblockierung umfasst, mit der eine ordnungsgemäße Positionierung der Schale in dem Haushaltsgerät überwacht wird. Fehler der magnetischen Blockiervorrichtung werden vermieden, indem alternierende magnetische Flüsse verwendet werden.

US 5,368,384 A offenbart einen Handmixer, der mittels eines Motors angetrieben wird, US 2,929,477 offenbart eine nicht-elektrische Kupplungsvorrichtung, welche drehmomentgesteuert betrieben werden kann und US 5,979,850 offenbart ebenfalls eine Küchenmaschine

Es ist Aufgabe der vorliegenden Erfindung, ein Küchengerät, insbesondere ein elektromotorisches Küchengerät, bzw. ein die Sicherheitsfunktion des Küchengeräts unterstützendes Werkzeug bereitzustellen, womit ein besonders hohes Maß an Sicherheit und Zuverlässigkeit im Betrieb erreicht wird.

Diese Aufgabe wird erfindungsgemäß durch, das Küchengerät sowie durch das Werkzeug wie in den unabhängigen Ansprüchen angegeben gelöst. Weitere vorteilhafte Einzelheiten und Weiterbildungen, die jeweils einzeln angewandt oder beliebig miteinander kombiniert werden können, sind Gegenstand der jeweilig abhängigen Ansprüche.

Das erfindungsgemäße elektromotorisches Küchengerät, vorzugsweise elektromotorische Solo- oder Universalküchenmaschine, umfasst einen Elektromotor, mindestens ein Werkzeug, mindestens eine Werkzeugkupplung zum Verbinden des Werkzeuges mit dem Küchengerät und eine Sicherheitsfixierung für das Werkzeug, die der Werkzeugkupplung zugeordnet ist und das Werkzeug während eines Betriebs des Elektromotors in der Werkzeugkupplung verriegelt bzw. fixiert.

Durch die Sicherheitsfixierung wird das Werkzeug in der Werkzeugkupplung fixiert bzw. gesichert, so dass es nicht aus der Werkzeugkupplung herausgenommen bzw. von dieser getrennt werden kann, während sich der Elektromotor (noch) dreht. Ein Trennen des Werkzeugs vom Küchengerät kann sowohl die Werkzugkupplung als auch das Werkzeug beschädigen, wenn sich während des Trennvorgangs der Elektromotor noch dreht. Eine Beschädigung der Teile kann insbesondere dann auftreten, wenn das Werkzeug während des Trennvorgangs mechanisch belastet ist, beispielsweise, wenn ein Knetwerk einen Teig knetet. Darüberhinaus stellt die Sicherheitsfixierung auch sicher, dass das Werkzeug vollständig zur Ruhe gekommen ist, bevor es von dem Küchengerät getrennt wird. Dieses ist vor dem Hintergrund, die Bedienung bzw. den Umgang mit dem Küchengerät noch sicherer zu machen, besonders vorteilhaft, da hierdurch gewährleistet wird, dass keine Verletzungsgefahr von den beweglichen Teilen wie z.B. den scharfen Kanten eines Schneidwerks ausgeht. Im Gegensatz zu einer Verriegelung, die auf den Elektromotor wirkt und diesen ausschaltet, sobald festgestellt wird, dass das Werkzeug nicht ordnungsgemäß an bzw. in dem Küchengerät sitzt, wirkt die Verriegelung der Sicherheitsfixierung auf die Werkzeugkupplung und lässt kein Abkoppeln des Werkzeugs zu, wenn sich das Werkzeug bzw. der Elektromotor noch nicht still steht. Die Sicherheitsfixierung ist somit in der Lage, das Küchengerät auch während eines Nachlaufes abzusichern, d.h. für den Zeitraum, während der Elektromotor schon ausgeschaltet ist aber sich noch dreht. Darüberhinaus verhindert die Sicherheitsfixierung, dass sich das Werkzeug während des Betriebs von alleine aus der Werkzeugkupplung löst.

Die Sicherheitsfixierung kann erfindungsgemäß einen elektrisch betätigten Riegelmechanismus aufweisen. Bevorzugt kann die Sicherheitsfixierung insbesondere einen elektromagnetisch betätigten Riegelmechanismus, beispielsweise einen elektromagnetischen Verschluss, zur Verriegelung der Werkzeugkupplung aufweisen. Mit Hilfe eines Elektromagneten und eines mit Hilfe des Elektromagneten angetriebenen Riegels kann das Werkzeug sicher in der Werkzeugkupplung gehalten werden.

Die Sicherheitsfixierung kann eine Zeitschaltung aufweisen, welche die Werkzeugkupplung erst nach einer bestimmten Zeitdauer nach Ausschalten des Elektromotors, insbesondere nach einer Zeitdauer von 0,1 s bis 2 s, freigibt. Durch eine verzögerte Freigabe kann sichergestellt werden, dass der Elektromotor und die beweglichen Teile wie z.B. das Werkzeug vollständig zur Ruhe gekommen sind, bevor das Werkzeug von dem Küchengerät getrennt wird.

Die Zeitschaltung kann ein Mittel zur Erkennung eines Werkzeugtyps aufweisen, wobei die Zeitdauer in Abhängigkeit des Werkzeugtyps gewählt wird. Mit Hilfe der Erkennung des Werkzeugtyps kann die Dauer des Nachlaufs des Werkzeugs besser abgeschätzt werden und die für die Absicherung des Küchengeräts erforderliche minimale Zeitdauer, d.h. die Zeitdauer des Nachlaufes, so klein wie möglich und so groß wie nötig bestimmt werden.

Das Werkzeug kann ein Verriegelungselement, insbesondere eine Riegelaufnahme oder einen Vorsprung, aufweisen. Um in der Werkzeugkupplung sicher verriegelt zu werden, weist das Werkzeug eine entsprechende Aufnahme für einen Riegel auf. Alternativ kann das Werkzeug einen Vorsprung aufweisen, der mit einer entsprechenden Verriegelungsaufnahme am Küchengerät in Eingriff gelangt und hierdurch verriegelt wird.

Die Sicherheitsfixierung kann einen mechanisch betätigten Riegelmechanismus, insbesondere eine Raste, zur Verriegelung der Werkzeugkupplung aufweisen. Durch eine mechanische Raste kann eine zusätzliche Absicherung bewirkt werden.

Der Riegelmechanismus weist insbesondere ein Sensormittel zum Erfassen des Verriegelungszustands der Sicherheitsfixierung auf, wobei ein Betrieb des Elektromotors nur bei vollständiger Verriegelung möglich ist. Mit Hilfe des Sensormittels wird sichergestellt, dass die Verriegelung während des Betriebs tatsächlich aktiv bzw. wirksam ist. Durch diese Kontrolle der Verriegelung wird die Wahrscheinlichkeit von Fehlfunktionen weiter reduziert.

Das Werkzeug kann ein Pürier-, Misch-, Häcksel-, Knet- und/oder Schneidwerk, ein Schlag- bzw. Rührbesen, ein Getränkemixer, ein Durchlaufschnitzler, eine Getreidemühle, eine Zitrus- bzw. Fruchtpresse, ein Fleischwolf, und/oder ein Mixerbehälter sein.

Das erfindungsgemäße Werkzeug für ein Küchengerät, insbesondere ein Mixerbehälter, ist in einer ersten Variante geeignet und bestimmt zur Verwendung mit dem erfindungsgemäßen Küchengerät.

Eine zweite Variante der Erfindung sieht vor, dass das Werkzeug, insbesondere Mixerbehälter, geeignet für ein eine Sicherheitsfixierung aufweisendes Küchengerät ist, wobei die Sicherheitsfixierung geeignet ist, das Werkzeug in einer am Küchengerät vorgesehenen Werkzeugkupplung während eines Betriebs des Küchengeräts zu verriegeln. Hierbei weist das Werkzeug, ein Verriegelungselement, insbesondere eine Riegelaufnahme oder ein Vorsprung, für eine mechanische Verriegelung bzw. Fixierung des Werkzeugs an bzw. in der Werkzeugkupplung auf. Das Werkzeug und das Küchengerät sind aufeinander in der Weise abgestimmt und aufeinander angepasst, dass die Verriegelungsfunktion der Sicherheitsfixierung wirksam werden kann.

Weitere vorteilhafte Einzelheiten und Ausgestaltungen, die jeweils angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
- Fig. 1: ein erfindungsgemäßes Küchengerät in einer perspektivischen Ansicht von oben,
- Fig. 2: einen in ein erfindungsgemäßes Küchengerät eingesetzten Mixerbehälter des erfindungsgemäßen Küchengeräts im Längsschnitt mit eingesetztem Behälterdeckel;
- Fig. 3: einen in ein erfindungsgemäßes Küchengerät eingesetzten Mixerbehälter im Längsschnitt ohne eingesetztem Behälterdeckel;
- Fig. 4: eine Ausführungsform eines Magnetschalters eines erfindungsgemäßen Küchengeräts im geöffneten Zustand im Querschnitt;
- Fig. 5: den Magnetschalter nach Fig. 4 im zusammengebauten Zustand des Küchengeräts;
- Fig. 6: eine weitere Ausführungsform des Magnetschalters eines erfindungsgemäßen Küchengeräts im zusammengebauten Zustand des Küchengeräts;
- Fig. 7: eine weitere Ausführungsform eines Magnetschalters eines erfindungsgemäßen Küchengeräts in geöffneter Stellung;
- Fig. 8: den Magnetschalter nach Fig. 7 in geschlossener Stellung; und
- Fig. 9: einen Ausschnitt aus einem erfindungsgemäßen Küchengeräts mit einem Mixerbehälterabschnitt und einer Sicherheitsfixierung.

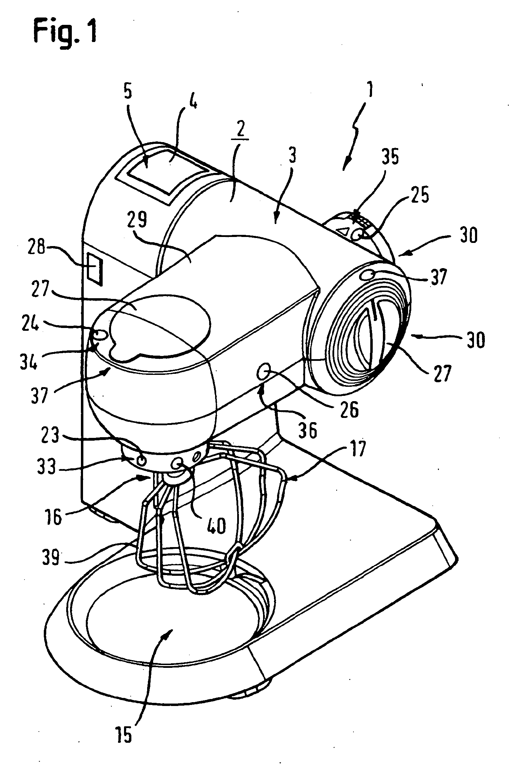

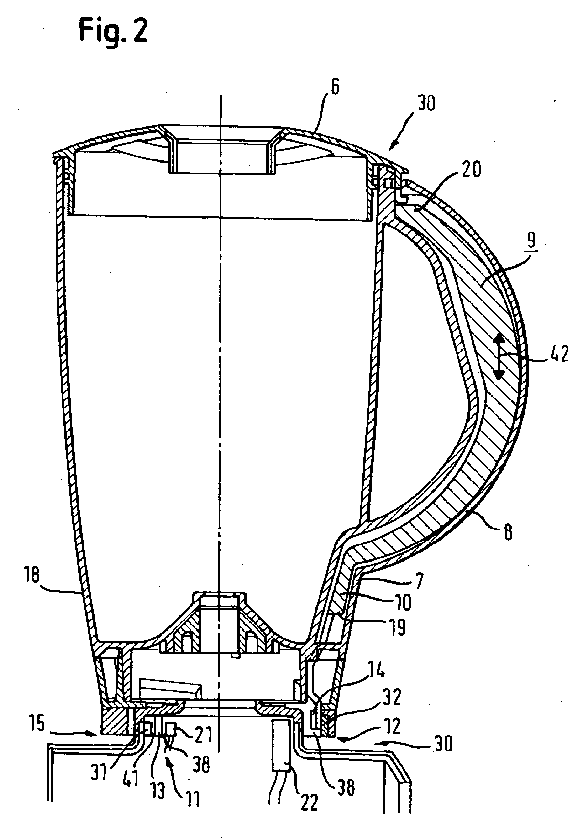

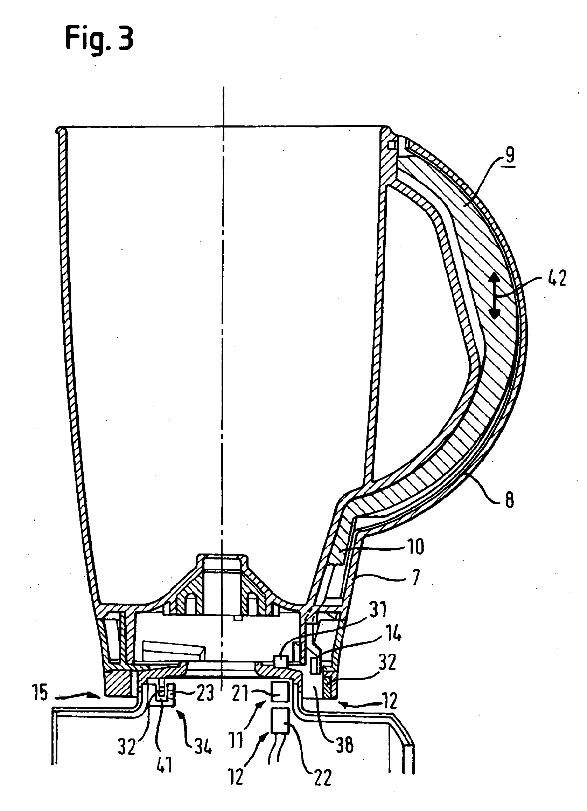

Fig. 1 zeigt ein erfindungsgemäßes Küchengerät 1 mit einem Gerätegehäuse 2, welches einen Elektromotor 3 aufweist, der mit einem Einschalter 4 eingeschaltet werden kann. Der Einschalter 4 ist erst dann wirksam bzw. erst dann aktivierbar, wenn er durch eine Sicherheitsverriegelung 5 freigegeben ist. Mit Hilfe der Sicherheitsverriegelung 5 wird sichergestellt, dass ein als Rührbesen 39 ausgestaltetes erstes Werkzeug 17 bzw. ein als Mixerbehälter 7 ausgestaltetes zweites Werkzeug 18 (siehe Fig. 2 und 3) ordnungsgemäß in das Küchengerät 1 eingesetzt ist. Mit der Sicherheitsverriegelung 5 wird auch sichergestellt, dass ein Behälterdeckel 6 für den Mixerbehälter 7 (s. Fig. 2 und 3) ordnungsgemäß verschlossen ist. Nachdem die Sicherheitsverriegelung 5 erkannt hat, dass das Küchengerät 1 vollständig zusammengebaut wurde bzw. die Werkzeuge 17, 18 ordnungsgemäß angeschlossen wurden, wird der Einschalter 4 aktiviert, so dass erst zu diesem Zeitpunkt der Elektromotor 3 bzw. das Küchengerät 1 in Betrieb genommen werden kann. Hierdurch wird die Sicherheit bei der Verwendung des Küchengeräts 1 erheblich gesteigert. Das Küchengerät 1 weist eine erste 15, zweite 16 und eine dritte 27 Werkzeugkupplung auf, welche von entsprechenden Magnetsensoren 21-26 (s. a. Fig. 2 und 3) überwacht werden. Beispielsweise wird die zweite Werkzeugkupplung 16 mit Hilfe eines dritten Magnetschalters 33, der einen dritten Magnetsensor 23 aufweist, überwacht. Eine dritte Werkzeugkupplung 27 wird mit Hilfe eines Sensors 37, der als vierter Magnetsensors 24 ausgestaltet sein kann, überwacht. Der vierte Magnetsensor 24 ist einem vierten Magnetschalter 34 zugeordnet, mit dem ein vollständiges Verschließen der dritten Werkzeugkupplung 27 überwacht wird. Die Magnetschalter 11, 12, 33-36 bzw. die Magnetsensoren 21-26 sind so beschaffen bzw. an den jeweiligen Werkzeugkupplungen 17, 18, 27 derart angeordnet, dass sie erst dann betätigt werden können, wenn eine von diesem Magnetschalter 11, 12, 33-36 zu überwachende Schnittstelle 30 vollständig funktionstüchtig, abgesichert bzw. verschlossen ist. Das Küchengerät 1 weist einen Gerätegehäusedeckel 29 auf, mit dem das Gerätegehäuse 2 geöffnet werden kann. Auch der Gerätegehäusedeckel 29 wird mit Hilfe eines Magnetschalters 36 und eines sechsten Magnetsensors 26 überwacht. Die erste Werkzeugkupplung 15 ist dazu geeignet und bestimmt, einen Mixerbehälter 7 sicher aufzunehmen. Ein Werkzeugtypsensor 40 an dem Küchengerät 1 erfasst den Typ des eingesetzten Werkzeugs 17 und eine Gerätesteuerung 28 steuert den Elektromotor 3 entsprechend an, wobei insbesondere die Geschwindigkeit des Werkzeugs 17 geeignet gewählt wird. Ein fünfter Magnetsensor 25 überwacht als Teil eines weiteren Magnetschalters 35 die Schnittstelle 30, welche zur Aufnahme einer Getreidemühle (nicht dargestellt) geeignet ist. Durch die Verwendung der Vielzahl von Magnetschaltern 11, 12, 33-36 bzw. der Magnetsensoren 21-26 wird ein Betriebszustand des Küchengeräts 1 sicherheitstechnisch und funktionstechnisch im Wesentlichen vollständig erfasst. Die Magnetsensoren 21-26 sind als Reed-Sensoren vorgesehen.

Fig. 2 zeigt einen Mixerbehälter 7 des erfindungsgemäßen Küchengeräts 1 im Längsschnitt mit einem Behältergriff 8. Mit Hilfe eines in dem Behältergriff 8 zwischen einer ersten und einer zweiten Position hin- und her beweglichen Gestänges 9, welches als Koppelstange 10 ausgestaltet ist, wird die Schnittstelle 30 an einem Behälterdeckel 6 überwacht, indem das Gestänge 9 bei ordnungsgemäß eingesetztem Behälterdeckel 6 auf einen zweiten Schaltschieber 14 drückt, der dadurch in einen Zwischenraum 38 zwischen einem zweiten Magnetsensor 22 und einen am Mixerbehälter 7 angeordneten zweiten Magneten 32 geschoben wird. Der zweite Schaltschieber 14 ist aus einem ferromagnetischen Material gefertigt und lenkt das von dem zweiten Magneten 32 erzeugte magnetische Feld auf den zweiten Magnetsensor 22, der dann ein entsprechendes Signal an die Gerätesteuerung 28 liefert. Der Schaltschieber 14 kann ein quaderförmiger Block aus Eisen sein. An der ersten Werkzeugkupplung 15 ist darüber hinaus ein erster Magnetschalter 11 angeordnet, mit dem ein ordnungsgemäßes Einsetzen des Mixerbehälters 7 in die erste Werkzeugkupplung 15 überwacht wird, indem ein erster Schaltschieber in einen Zwischenraum 38 zwischen einem ersten Magnetsensor 21 und einem ersten Magnet 31 eingeschoben wird, so dass das von dem ersten Magnet 31 erzeugte Magnetfeld auf den ersten Magnetsensor gelenkt wird, so dass dieser ein ordnungsgemäßes Verbinden des Mixerbehälters 7 mit der ersten Werkzeugkupplung 15 anzeigt. Der erste Magnetschalter 11 weist eine Vertiefung 41 auf, in welche der erste Schaltschieber 13 eingreifen muss, um den ersten Magnetschalter 11 zu betätigen. Der Behälterdeckel 6 gelangt an einem deckelseitigen Ende 20 des Gestänges 9 mit dem Gestänge 9 in mechanischen Eingriff. Das Gestänge 9 bewegt sich entlang einer Bewegungsrichtung 42 zwischen einer ersten und einer zweiten Position hin und her und positioniert somit einen zweiten Schaltschieber 14 eines zweiten Magnetschalters 12 in einen Zwischenraum 38 zwischen einem zweiten Magnet 32 und einem zweiten Magnetsensor 22. Der zweite Magnetschalter 12 ist an der Schnittstelle 30 angeordnet.

Fig. 3 zeigt einen Mixerbehälter 7 ohne Behälterdeckel 6 im Längsschnitt. Man erkennt, dass der zweite Schaltschieber nicht in dem Zwischenraum 38 angeordnet ist, so dass der zweite Magnetschalter 12 mit dem zweiten Magnetsensor 22 und dem zweiten Magnet 32 nicht geschlossen ist. Folglich kann das Küchengerät 1 nicht in Betrieb genommen werden. Ein vierter Magnetschalter 34 weist einen Magneten 32 auf, der den ersten Magnetsensor 21 bei einem ordnungsgemäß in die Werkzeugkupplung 15 eingesetzten Mixerbehälter 7 betätigt. Ein weiterer Magnetschalter 33 ist an der ersten Werkzeugkupplung 15 vorgesehen. Der weitere Magnetsensor umfasst eine Vertiefung 41, in der ein dritter Magnetsensor 23 angeordnet ist und in die der zugeordnete zweite Magnet 32 eingreift. Durch die Vertiefung wird der dritte Magnetsensor 23 von dem Einfluss von externen Magneten (nicht dargestellt) geschützt, da diese hierdurch von dem dritten Magnetsensor 23 hinreichend weit beabstandet werden. Hierdurch wird die Sicherheit der Überwachung und die Funktionszuverlässigkeit der Sicherheitsregelung 5 weiter gesteigert.

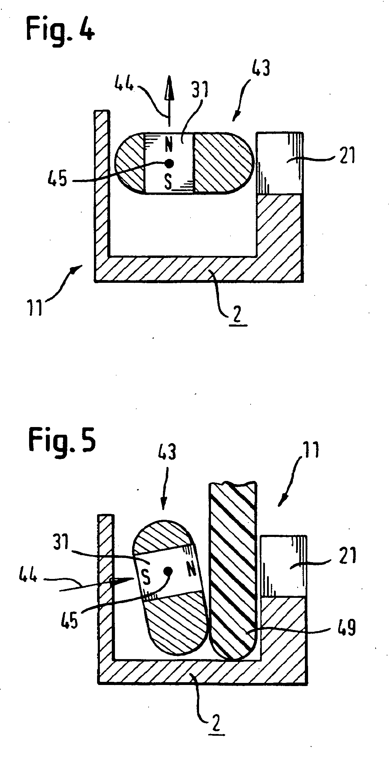

Fig. 4 zeigt eine Ausführungsform eines Magnetschalters 11 eines erfindungsgemäßen Küchengeräts 1 im geöffneten Zustand im Querschnitt, wobei ein Mittel 43 zur Beeinflussung des Magnetfelds durch die Drehbarkeit des Magneten 31 gegeben ist. Der Magnet 31, dessen Polarität Nord (N) - Süd (S) durch die Nord-Süd-Richtung 44 gegeben ist, ist ortsfest und drehbar um eine Achse 45 an dem Gerätegehäuse 2 gelagert. Im geöffneten Zustand des Magnetschalters 11 ist die Nord-Süd-Richtung 44 tangential zu konzentrischen Kreisen, deren Zentrum mit dem Magnetsensor 21 zusammenfällt.

Fig. 5 zeigt den Magnetschalter 11 nach Fig. 4 im zusammengebauten Zustand des Küchengeräts 1, wobei ein Mixerbehälterabschnitt 49 eines Mixerbehälters 7 in den Magnetschalter 11 eingreift und den Magneten 31 mit seiner Nord-Süd-Richtung 44 um die Achse 45 derart dreht, dass der eine Pol (N) des Magneten 31 in die Nähe des Magnetsensors 21 gelangt. Hierdurch übersteigt das Magnetfelds des Magneten 31 am Magnetsensor 21 einen bestimmten Wert und ein Schaltvorgang wird auslöst.

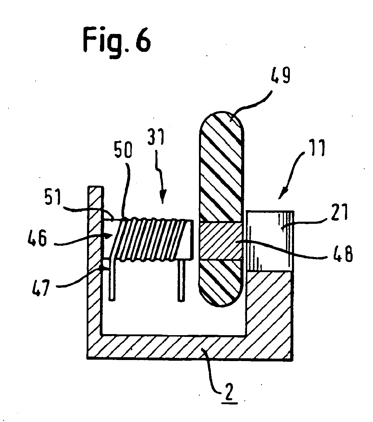

Fig. 6 zeigt eine weitere Ausführungsform des Magnetschalters 11 eines erfindungsgemäßen Küchengeräts 1 im zusammengebauten Zustand des Küchengeräts 1, wobei ein Mixerbehälterabschnitt 49 eines Mixerbehälters 7 in den Magnetschalter 11 eingreift. Hierbei besteht der Magnet 31 aus einem ersten Einzelmagnet 46, der als Permanentmagnet 51 ausgestaltet ist, und einem zweiten Einzelmagnet 47, der durch einen um den Permanentmagneten 52 gewickelten Elektromagnet 50 gebildet ist. Durch den Elektromagneten 50 kann auf das am Magnetsensor 21 wirkende Magnetfeld Einfluss genommen werden. Der Mixerbehälterabschnitt 49 weist ein magnetisierbares Material 48 auf, durch welches das Magnetfeld des zusammengesetzten Magneten 31 auf den Magnetsensor 21 gelenkt und dort konzentriert wird.

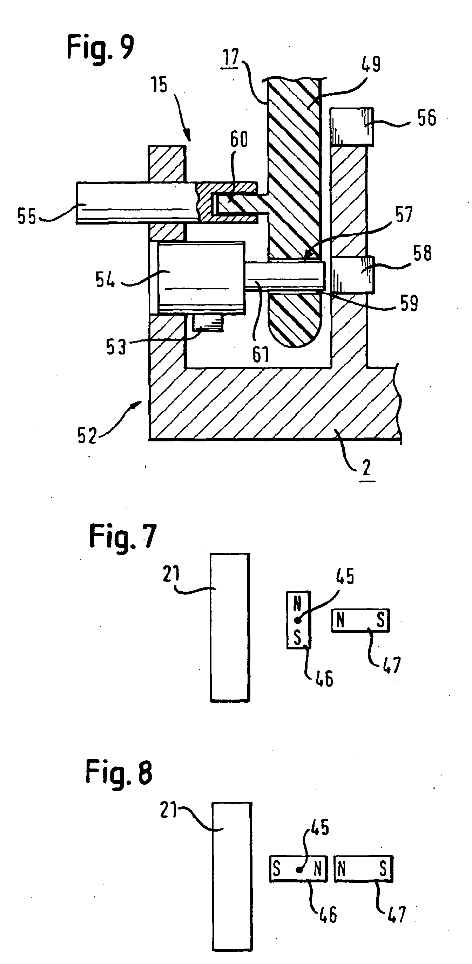

Figuren 7 und 8 zeigen eine weitere Ausführungsform eines Magnetschalters eines erfindungsgemäßen Küchengeräts in einer geöffneten (Fig. 7) bzw. in einer geschlossenen (Fig. 8) Stellung, wobei in Figur 7 ein erster Einzelmagnet 46 und ein zweiter Einzelmagnet 47 gekreuzt zueinander stehen und das am Magnetsensor 21 wirkende Magnetfeld nicht ausreicht, um den Magnetsensor 21 zu schließen. In Figur 8 kommt der Südpol (S) des ersten Einzelmagneten 46 dem Magnetsensor 21 hinreichend nahe, um einen Schließen des Schalters zu bewirken. Der zweite Einzelmagnet 47 hat die Funktion, mit seinem Nordpol (N) den Nordpol (N) des ersten Einzelmagneten (46) wegzudrücken und somit den ersten Einzelmagneten 46 stets zur geöffneten Stellung hin zu drücken, so dass das Küchengerät 1 nur dann betriebsbereit ist, wenn ein Werkzeug eingesetzt ist. Der zweite Einzelmagnet 47 bewirkt somit eine Stabilisierung des abgesicherten Zustands des Küchengeräts und erhöht somit die Sicherheit weiter.

Fig. 9 zeigt einen Ausschnitt aus einem erfindungsgemäßen Küchengerät 1 mit einem Mixerbehälterabschnitt 49 und einer Sicherheitsfixierung 52 zum Verriegeln des Werkzeugs 17 in der Werkzeugkupplung 15, wobei die Sicherheitsfixierung 52 an einem Gerätegehäuse 2 des Küchengeräts 1 befestigt ist und mit dem Werkzeug 17 zusammenwirkt. Der Mixerbehälterabschnitt 49 weist ein als Riegelaufnahme 59 ausgebildetes Verriegelungselement 57 auf, in welches ein Riegel 61 eingreift, und somit das Werkzeug 17 in der Werkzeugkupplung 15 fixiert. Der Riegel 61 wird mit Hilfe eines elektrisch betätigten Riegelmechanismus 54 hin und her bewegt. Insbesondere wird der Riegel 61 vor Inbetriebnahme des Küchengerät in die Riegelaufnahme 59 geschoben und erst nach völligem Stillstand des Elektromotors wieder zurückbewegt, wobei der Nachlauf berücksichtigt wird. Hierdurch ist ein Trennen des Werkzeugs 17 vom Küchengerät 1 nur dann möglich, wenn das Küchengerät vollständig still steht. Mit Hilfe eines Mittels 56 zur Erkennung eines Werkzeugtyps kann der Nachlauf des jeweiligen Werkzeugs abgeschätzt werden und somit die minimal erforderliche Dauer der Verriegelung festgelegt werden. Mit Hilfe eines Sensormittels 58 wird festgestellt, ob die Verriegelung tatsächlich wirksam bzw. aktiv ist. Ein mechanisch betätigter Riegelmechanismus 55 unterstützt weiter die Verrieglung. Das Werkzeug 17 kann anstelle einer Riegelaufnahme 59 auch einen Vorsprung 60 aufweisen (hier in Verbindung mit dem mechanisch betätigten Verriegelungsmechanismus 55 gezeigt), der in entsprechender Weise mit der Werkzeugkupplung 15 in Eingriff gelangt und somit die Sicherheitsfixierung 52 bewirkt. Die Sicherheitsfixierung 52 dient dazu, ein Herausnehmen bzw. Entkoppeln des Werkzeugs 17 aus der Werkzeugkupplung 15 während eines Betriebs des Küchengeräts 1, insbesondere, während sich der Elektromotor 3 des Küchengeräts 1 noch dreht, zu verhindern. Hierdurch wird sichergestellt, dass eine Bedienperson des Küchengeräts 1 nicht mit sich noch bewegenden Teilen des Küchengeräts 1, insbesondere nicht mit scharfen Kanten, wie z.B. einem Schneidwerk, eines Werkzeugs 17 in Berührung kommt. Darüberhinaus wird sichergestellt, dass das Küchengerät 1 bzw. das Werkzeug 17 keinen Schaden nimmt, wenn das Werkzeug im Zustand mit sich drehenden Teilen von dem Küchengerät getrennt wird.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhaftes Küchengerät 1, insbesondere elektromotorisches Küchengerät 1 , vorzugsweise elektromotorische Solo- oder Universalküchenmaschine, kann einen Einschalter 4 und eine dem Einschalter 4 zugeordnete Sicherheitsverriegelung 5 umfassen, die nur dann den Einschalter 4 entriegelt und einen Betrieb des Küchengeräts 1 zulässt, wenn das Küchengerät 1 ordnungsgemäß zusammengebaut ist, und ist dadurch gekennzeichnet, dass die Sicherheitsverriegelung 5 mindestens vier, vorzugsweise mindestens sechs, separate Magnetschalter 11, 12, 33 - 36 mit Magnetsensoren 21 - 26, insbesondere Reed-Sensoren, aufweist. Insbesondere ist mindestens ein Magnetschalter 11, 12, 33 - 36 mit mindestens einem Magnetsensor 21 - 26 vorgesehen, wobei der Magnetsensor 21 -26 ein Reed-Sensor ist. In einer Ausgestaltung weist das Küchengerät 1 mindestens einen ansteckbaren Mixerbehälter 7 auf, der mit einer ersten Werkzeugkupplung 15 mit dem Küchengerät 1 verbindbar ist, wobei an der ersten Werkzeugkupplung 15 ein erster Magnetsensor 21 für die Überwachung einer ordnungsgemäßen Verbindung des Mixerbehälters 7 mit dem Küchengerät 1 vorgesehen ist. In einer weiteren Ausgestaltung weist der Mixerbehälter 7 einen Behälterdeckel 6 auf und ein zweiter Magnetsensor 22 ist für die Überwachung eines ordnungsgemäßen Schließens des Mixerbehälters 7 mit dem Behälterdeckel 6 vorgesehen. Der zweite Magnetsensor 22 kann an der ersten Werkzeugkupplung 15, vorzugsweise am Küchengerät 1, angeordnet sein, wobei insbesondere an dem Mixerbehälter 7, insbesondere in einem an dem Mixerbehälter 7 vorgesehenen Behältergriff 8, ein zwischen einer ersten Position und einer zweiten Position hin und her bewegliches Gestänge 9, insbesondere eine Koppelstange 10, vorgesehen ist, welches derart mit dem Behälterdeckel 6 in Eingriff gelangt, dass das Gestänge 9 bei ordnungsgemäß geschlossenem Behälterdeckel 6 die erste Position und sonst die zweite Position einnimmt, wobei mit Hilfe des Gestänges 9 der zweite Magnetsensor 2 betätigbar ist. In einer Weiterbildung weist das Küchengerät 1 mindestens ein ansteckbares erstes Werkzeug 17, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer zweiten Werkzeugkupplung 16 mit dem Küchengerät 1 verbindbar ist, wobei an der zweiten Werkzeugkupplung 16 ein dritter Magnetsensor 23 für die Überwachung einer ordnungsgemäßen Verbindung des ersten Werkzeugs 17 mit dem Küchengerät 1 vorgesehen ist. In einer weiteren Weiterbildung weist das Küchengerät 1 mindestens ein ansteckbares zweites Werkzeug 18, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer dritten Werkzeugkupplung 27 mit dem Küchengerät 1 verbindbar ist, wobei an der dritten Werkzeugkupplung 27 ein vierter Magnetsensor 24 für die Überwachung einer ordnungsgemäßen Verbindung des zweiten Werkzeugs 18 mit dem Küchengerät 1 vorgesehen ist. Vorteilhafterweise weist das Küchengerät 1 mehrere, insbesondere mindestens 3, Werkzeugkupplungen 15, 16, 27 für verschiedene Werkzeuge 17, 18, insbesondere Pürier-, Misch-, Häcksel-, Knet- und/oder Schneidwerke, Mixerbehälter 7 und/oder Fleischwolf, auf und jeder Werkzeugkupplung 15, 16, 27 ist mindestens ein Magnetsensor 21- 26 zugeordnet. In einer weiteren Weiterbildung kann mindestens ein Magnetsensor 21- 26, insbesondere können mindestens 2, vorteilhafterweise ein überwiegender Anteil der, Magnetsensoren 21- 26 den Typ des eingesetzten Werkzeugs 17, 18 identifizieren. Insbesondere umfasst das Küchengerät 1 eine Gerätesteuerung 28, welche die Betriebsweise des Küchengeräts 1, insbesondere die Geschwindigkeit und/oder Leistungsstufe eines Elektromotors 3, entsprechend der Identifizierung beeinflusst. In einer weiteren Ausgestaltung weist das Küchengerät 1 ein Gerätegehäuse 2 und einen Gerätegehäusedeckel 29 auf und ein fünfter Magnetsensor 5 ist für die Überwachung eines ordnungsgemäßen Schließens des Gerätegehäuses 2 mit dem Gerätegehäusedeckel 29 vorgesehen. In einer Weiterbildung sind die Magnetschalter 11, 12, 33 - 36 bzw. die Magnetsensoren 21 - 26 so beschaffen und/oder angeordnet, dass ein Magnetschalter 11, 12, 33 - 36 erst dann betätigt wird, wenn eine von diesem Magnetschalter 11, 12, 33 - 36 zu überwachende Schnittstelle 30 vollständig funktionstüchtig bzw. abgesichert ist. Vorteilhafterweise weist der Magnetschalter 11, 12, 33 - 36 zur Reduzierung von Störeinflüssen durch externe Magneten eine Vertiefung 41 aufweist, in der der Magnetsensor 21 - 26 angeordnet ist und in die ein Magnet 31, 32 des Magnetschalters 11, 12, 33 - 36 eingreifen kann.

Ein besonders vorteilhaftes Verfahren zum Betreiben eines Küchengeräts 1, insbesondere elektromotorisches Küchengerät 1, vorzugsweise elektromotorische Solo- oder Universalküchenmaschine, besonders bevorzugt eines erfindungsgemäßen Küchengeräts 1, wobei das Küchengerät 1 mehrere einsetzbare Werkzeuge 7, 17, 18, 39, insbesondere ein Mixerbehälter 7, Pürier-, Misch-, Häcksel-, Knet- und/oder Schneidwerke, Schlag- bzw. Rührbesen 39, Getränkemixer, Durchlaufschnitzler, Getreidemühlen, Zitrus- bzw. Fruchtpressen und/oder Fleischwolf, aufweist, wobei eines der Werkzeuge 17, 18 von dem Küchengerät 1 aufgenommen wird, ist dadurch gekennzeichnet, dass mit Hilfe mindestens zweier Sensoren 37, insbesondere mit Hilfe von Magnetsensoren 21 - 26, der Werkzeugtyp des eingesetzten Werkzeugs 17, 18 identifiziert wird und die Betriebsweise des Küchengeräts 1, insbesondere die Geschwindigkeit und/oder Leistungsstufe eines Elektromotors 3, entsprechend der Identifizierung beeinflusst, insbesondere angepasst, wird.

Ein besonders vorteilhaftes Küchengerät 1, insbesondere elektromotorisches Küchengerät 1, vorzugsweise elektromotorische Solo- oder Universalküchenmaschine, umfasst einen Einschalter 4 und eine dem Einschalter 4 zugeordnete Sicherheitsverriegelung 5, die den Einschalter 4 nur dann entriegelt und einen Betrieb des Küchengeräts 1 zulässt, wenn das Küchengerät 1 ordnungsgemäß zusammengebaut ist, wobei die Sicherheitsverriegelung 5 mindestens einen Magnetschalter 11, 12, 33-36 mit mindestens einem Magneten 31, 32 und mindestens einem Magnetsensor 21-26 aufweist, und wobei der Magnet ein permanentes oder niederfrequentes Magnetfeld generiert, und ist dadurch gekennzeichnet, dass Mittel 43 zur Beeinflussung des Magnetfelds in Abhängigkeit eines Schließzustandes des Küchengerätes vorgesehen sind. In einer Ausgestaltung kann das Magnetfeld des Magneten gedreht werden. Die Polarität des Magneten kann insbesondere umgekehrt werden. Insbesondere ist der Magnet um eine Achse quer zur Nord-Süd-Richtung des Magneten drehbar und/oder verschwenkbar. Der drehbare und/oder verschwenkbare Magnet ist insbesondere im Wesentlichen ortfest. In einer Ausgestaltung ist der Magnet um einen Winkel von mindestens 30°, insbesondere um einen Winkel von mindestens 60°, beispielsweise um 90° oder 180°, drehbar und/oder verschenkbar. Der Magnet 31, 32 kann eine Mehrzahl von Einzelmagneten 46, 47 umfassen. Der Magnet kann einen Elektromagneten 50 und/oder einen Permanentmagneten 51 umfassen. Das Mittel zur Beeinflussung 43 des Magnetfelds kann magnetisierbares Material, insbesondere einen Weichmagnet, umfassen, das mit dem Magnetfeld wechselwirken und das Magnetfeld in einem Bereich um bzw. am Magnetsensor derart konzentrieren oder abschwächen kann, dass ein Schaltungsvorgang des Magnetschalters bewirkt wird. Der Magnetsensor kann einen Reed-Sensor und/oder einen Hall-Sensor umfassen. Der Magnetschalter kann einen weichmagnetisierbaren, insbesondere ferromagnetischen, Schaltschieber aufweisen, mit dem ein von dem Magnetsensor zu erfassendes Magnetfeld beeinflusst, insbesondere an dem Magnetsensor konzentriert oder von dem Magnetsensor abgeschirmt, werden kann.

Ein vorteilhaftes Werkzeug 17 für ein Küchengerät 1, insbesondere Mixerbehälter 7, ist geeignet und bestimmt zur Verwendung mit dem erfindungsgemäßen Küchengerät 1.

Ein weiteres vorteilhaftes Werkzeug 17 für ein eine Sicherheitsverriegelung 5 aufweisendes Küchengerät 1, insbesondere Mixerbehälter 7, wobei die Sicherheitsverriegelung mindestens einen Magnetschalter 11, 12, 33 - 36 mit mindestens einem Magneten 31, 32 und mindestens einem Magnetsensor 21 - 26 aufweist, umfasst ein Mittel zur Beeinflussung 43 eines von dem Magnetsensor 21 - 26 zu erfassendes Magnetfeld, wobei das Mittel zur Beeinflussung 43 magnetisierbares Material 48, insbesondere einen Weichmagnet, aufweist, das mit dem Magnetfeld wechselwirken und das Magnetfeld in einem Bereich um bzw. an dem Magnetsensor 21 - 26 derart konzentrieren oder abschwächen kann, dass ein Schaltungsvorgang des Magnetschalters 11, 12, 33 - 36 bewirkt wird.

Die Erfindung betrifft ein elektromotorisches Küchengerät 1, vorzugsweise elektromotorische Solo- oder Universalküchenmaschine, umfassend einen Elektromotor 3, mindestens ein Werkzeug 17, 18, mindestens eine Werkzeugkupplung 15, 16 zum Verbinden des Werkzeuges 17, 18 mit dem Küchengerät 1 und eine Sicherheitsfixierung 52 für das Werkzeug 17, 18, die der Werkzeugkupplung 15, 16 zugeordnet ist und das Werkzeug 17, 18 während eines Betriebs des Elektromotors 3 in der Werkzeugkupplung 15, 16 verriegelt; sowie ein die Sicherheitsfunktion des Küchengeräts 1 unterstützendes Werkzeug 17. Die Erfindung zeichnet sich dadurch aus, dass das Küchengerät im Betrieb besonders zuverlässig und sicher in der Benutzung ist.

### Bezugszeichenliste

- 1: Küchengerät
- 2: Gerätegehäuse
- 3: Elektromotor
- 4: Einschalter
- 5: Sicherheitsverriegelung
- 6: Behälterdeckel
- 7: Mixerbehälter
- 8: Behältergriff
- 9: Gestänge
- 10: Koppelstange
- 11: erster Magnetschalter
- 12: zweiter Magnetschalter
- 13: erster Schaltschieber
- 14: zweiter Schaltschieber
- 15: erste Werkzeugkupplung
- 16: zweite Werkzeugkupplung
- 17: erstes Werkzeug
- 18: zweites Werkzeug
- 19: kupplungsseitiges Ende des Gestänges 9
- 20: deckelseitiges Ende des Gestänges 9
- 21: erster Magnetsensor
- 22: zweiter Magnetsensor
- 23: dritter Magnetsensor
- 24: vierter Magnetsensor
- 25: fünfter Magnetsensor
- 26: sechster Magnetsensor
- 27: dritte Werkzeugkupplung
- 28: Gerätesteuerung
- 29: Gerätegehäusedeckel
- 30: Schnittstelle
- 31: erster Magnet
- 32: zweiter Magnet
- 33-36: weitere Magnetschalter
- 37: Sensor
- 38: Zwischenraum
- 39: Rührbesen
- 40: Werkzeugtypsensor
- 41: Vertiefung
- 42: Bewegungsrichtung des Gestänges 9
- 43: Mittel zur Beeinflussung des Magnetfelds des Magneten 31,32
- 44: Nord-Süd-Richtung des Magneten 31, 32
- 45: Achse
- 46: erster Einzelmagnet
- 47: zweiter Einzelmagnet
- 48: magnetisierbares Material
- 49: Mixerbehälterabschnitt
- 50: Elektromagnet
- 51: Permanentmagnet
- 52: Sicherheitsfixierung
- 53: Zeitschaltung
- 54: elektrisch betätigter Riegelmechanismus
- 55: mechanisch betätigter Riegelmechanismus
- 56: Mittel zur Erkennung eines Werkzeugtyps
- 57: Verriegelungselement
- 58: Sensormittel.
- 59: Riegelaufnahme
- 60: Vorsprung
- 61: Riegel

## Patentansprüche

1. Elektromotorisches Küchengerät (1), vorzugsweise elektromotorische Solo- oder Universalküchenmaschine, umfassend
einen Elektromotor (3),
mindestens ein Werkzeug (17, 18),
mindestens eine Werkzeugkupplung (15, 16) zum Verbinden des Werkzeuges (17, 18) mit dem Küchengerät (1) und
eine Sicherheitsfixierung (52) für das Werkzeug (17, 18), die der Werkzeugkupplung (15, 16) zugeordnet ist und das Werkzeug (17, 18) während eines Betriebs des Elektromotors (3) in der Werkzeugkupplung (15, 16) verriegelt
**dadurch gekennzeichnet, dass** die Sicherheitsfixierung (52) einen elektrisch betätigten Riegelmechanismus (54) aufweist.

2. Küchengerät (1) nach Anspruch 1, **dadurch gekennzeichnet, dass** die Sicherheitsfixierung (52)
einen elektromagnetisch betätigten Riegelmechanismus (54), beispielsweise einen elektromagnetischen Verschluss, zur Verriegelung der Werkzeugkupplung (15, 16) aufweist.

3. Küchengerät (1) nach Anspruch 2, **dadurch gekennzeichnet, dass** die Sicherheitsfixierung (52) eine Zeitschaltung (53) aufweist, welche die Werkzeugkupplung (15, 16) erst nach einer bestimmten Zeitdauer nach Ausschalten des Elektromotors (3), insbesondere nach einer Zeitdauer von 0,1 s bis 2 s, freigibt.

4. Küchengerät (1) nach Anspruch 3, **dadurch gekennzeichnet, dass** die Zeitschaltung (53) ein Mittel (56) zur Erkennung eines Werkzeugtyps aufweist, und die Zeitdauer in Abhängigkeit des Werkzeugtyps gewählt wird.

5. Küchengerät nach einem der vorherigen Ansprüche, **dadurch gekennzeichnet, dass** das Werkzeug (17, 18) ein Verriegelungselement (57), insbesondere eine Riegelaufnahme (59) oder einen Vorsprung (60), aufweist.

6. Küchengerät nach einem der vorherigen Ansprüche, **dadurch gekennzeichnet, dass** die Sicherheitsfixierung (17, 18) einen mechanisch betätigten Riegelmechanismus (55), insbesondere eine Raste, zur Verriegelung der Werkzeugkupplung (15, 16) aufweist.

7. Küchengerät nach einem der vorherigen Ansprüche 2 bis 6, **dadurch gekennzeichnet, dass** der Riegelmechanismus (54, 55) ein Sensormittel (58) zum Erfassen des Verriegelungszustands der Sicherheitsfixierung (52) aufweist und ein Betrieb des Elektromotors (3) nur bei vollständiger Verriegelung möglich ist.

8. Küchengerät (1) nach einem der vorherigen Ansprüche, **dadurch gekennzeichnet, dass** das Werkzeug (7, 17, 18, 39) ein Pürier-, Misch-, Häcksel-, Knet- und/oder Schneidwerk, Schlag- bzw. Rührbesen (39), Getränkemixer, Durchlaufschnitzler, Getreidemühle, Zitrus- bzw. Fruchtpresse, Fleischwolf, und/oder ein Mixerbehälter (7) ist.

9. Küchengerät (1) nach Anspruch 8, **gekennzeichnet durch** einen Mixerbehälter (7), der mit der Sicherheitsfixierung (52) des Küchengeräts (1), dargestalt zusammenwirkt, dass die Sicherheitsfixierung (52) einen elektrisch betätigten Riegelmechanismus (54) aufweist, wobei die Sicherheitsfixierung (52) geeignet ist, den Mixerbehälter (7) in einer am Küchengerät (1) vorgesehenen Werkzeugkupplung (15, 16) während eines Betriebs des Küchengeräts (1) zu verriegeln, wobei das Werkzeug (17, 18) ein Verriegelungselement (57), insbesondere eine Riegelaufnahme (59), die eingerichtet ist mit einem hin und her beweabaren Riegel (61) des elektrisch betätigten Riegelmechanismus (54) zusammenzuwirken *[Beschreibung Seite 10, Zeilen 21-23],* oder einen Vorsprung (60) für eine mechanische Verriegelung bzw. Fixierung des Mixerbehälters (7) an bzw. in der Werkzeugkupplung (15, 16) aufweist.

## Claims

1. Kitchen appliance (1) driven by electric motor, preferably solo or universal food processor driven by electric motor, comprising
an electric motor (3),
at least one tool (17, 18),
at least one tool coupling (15, 16) for connecting the tool (17, 18) with the kitchen appliance (1) and
a safety fixing means (52) for the tool (17, 18), which safety fixing means is associated with the tool coupling (15, 16) and locks the tool (17, 18) in the tool coupling (15, 16) during operation of the electric motor (3),
**characterised in that** the safety fixing means (52) comprises an electrically actuated latching mechanism (54).

2. Kitchen appliance (1) according to claim 1, **characterised in that** the safety fixing means (52) comprises an electromagnetically actuated latching mechanism (54), for example an electromagnetic lock, for locking the tool coupling (15, 16).

3. Kitchen appliance (1) according to claim 2, **characterised in that** the safety fixing means (52) comprises time circuit (53) which frees the tool coupling (15, 16) only after a specific time period after switching-off of the electric motor (3), particularly after a time period of 0.1 seconds to 2 seconds.

4. Kitchen appliance (1) according to claim 3, **characterised in that** the time circuit (53) comprises means (56) for recognition of a tool type and the time period is selected in dependence on the tool type.

5. Kitchen appliance according to any one of the preceding claims, **characterised in that** the tool (17, 18) comprises a locking element (57), particularly a latch receptacle (59) or a projection (60).

6. Kitchen appliance according to any one of the preceding claims, **characterised in that** the safety fixing means (17, 18) comprises a mechanically actuated latching mechanism (55), particularly a catch, for locking the tool coupling (15, 16).

7. Kitchen appliance according to any one of the preceding claims 2 to 6, **characterised in that** the latching mechanism (54, 55) comprises a sensor means (58) for detecting the locking state of the safety fixing means (52) and operation of the electric motor (3) is possible only in the case of full locking.

8. Kitchen appliance (1) according to any one of the preceding claims, **characterised in that** the tool (7, 17, 18, 39) comprises a puréeing, mixing, chopping, kneading and/or cutting mechanism, beating or stirring whisk (39), drinks mixer, throughflow shredder, cereal mill, citrus or fruit press, mincer and/or a mixer container (7).

9. Kitchen appliance (1) according to claim 8, **characterised by** a mixer container (7) which co-operates with the safety fixing means (52) of the kitchen appliance (1) in such a manner that the safety fixing means (52) comprises an electrically actuated latching mechanism (54), wherein the safety fixing means (52) is suitable for locking the mixer container (7) in a tool coupling (15, 16), which is provided at the kitchen appliance (1), during operation of the kitchen appliance (1), wherein the tool (17, 18) comprises a locking element (57), particularly a latch receptacle (59), which is equipped to co-operate with a reciprocatingly movable latch (61) of the electrically actuated latching mechanism (54), or has a projection (60) for mechanical locking or fixing of the mixer container (7) to or in the tool coupling (15, 16).

## Revendications

1. Appareil de cuisine (1) à moteur électrique, de préférence robot de cuisine à moteur électrique à fonction unique ou universel, comprenant
un moteur électrique (3),
au moins un ustensile (17, 18),
au moins un élément de couplage d'ustensile (15, 16) pour coupler l'ustensile (17, 18) avec l'appareil de cuisine (1) et
un élément de fixation de sécurité (52) pour l'ustensile (17, 18), qui est associé à l'élément de couplage d'ustensile (15, 16) et qui verrouille l'ustensile (17, 18), pendant un fonctionnement du moteur électrique (3), dans l'élément de couplage d'ustensile (15, 16)
**caractérisé en ce que** l'élément de fixation de sécurité (52) présente un mécanisme formant verrou (54) actionné électriquement.

2. Appareil de cuisine (1) selon la revendication 1, **caractérisé en ce que** l'élément de fixation de sécurité (52) présente un mécanisme formant verrou (54) actionné électromagnétiquement, par exemple une fermeture électromagnétique, pour le verrouillage de l'élément de couplage d'ustensile (15, 16).

3. Appareil de cuisine (1) selon la revendication 2, **caractérisé en ce que** l'élément de fixation de sécurité (52) présente un temporisateur (53) qui ne libère l'élément de couplage d'ustensile (15, 16) qu'au bout d'un certain temps après avoir coupé le moteur électrique (3), en particulier au bout d'un temps de 0,1 s à 2 s.

4. Appareil de cuisine (1) selon la revendication 3, **caractérisé en ce que** le temporisateur (53) présente un moyen (56) permettant de reconnaître un type d'ustensile et **en ce que** le temps est choisi en fonction du type d'ustensile.

5. Appareil de cuisine selon l'une des revendications précédentes, **caractérisé en ce que** l'ustensile (17, 18) présente un élément de verrouillage (57), en particulier un logement de verrou (59) ou une protubérance (60).

6. Appareil de cuisine selon l'une des revendications précédentes, **caractérisé en ce que** l'élément de fixation de sécurité (17, 18) présente un mécanisme formant verrou (55) actionné mécaniquement, en particulier un cran d'arrêt, pour le verrouillage de l'élément de couplage d'ustensile (15, 16).

7. Appareil de cuisine selon l'une des revendications précédentes 2 à 6, **caractérisé en ce que** le mécanisme formant verrou (54, 55) présente un moyen formant capteur (58) pour détecter l'état de verrouillage de l'élément de fixation de sécurité (52) et **en ce qu'**un fonctionnement du moteur électrique (3) n'est possible qu'en cas de verrouillage complet.

8. Appareil de cuisine (1) selon l'une des revendications précédentes, **caractérisé en ce que** l'ustensile (7, 17, 18, 39) est un ustensile permettant de réduire en purée, mélanger, hacher, pétrir et/ou couper, un batteur ou fouet (39), un mixeur de boisson, une râpe-éminceur, un moulin à grains, un presse-citron ou presse-fruits, un hachoir à viande et/ou un récipient mixeur (7).

9. Appareil de cuisine (1) selon la revendication 8, **caractérisé par** un récipient mixeur (7) qui coopère avec l'élément de fixation de sécurité (52) de l'appareil de cuisine (1) de telle sorte que ledit élément de fixation de sécurité (52) présente un mécanisme formant verrou (54) actionné électriquement, ledit élément de fixation de sécurité (52) étant apte à verrouiller le récipient mixeur (7) dans un élément de couplage d'ustensile (15, 16) prévu sur l'appareil de cuisine (1) pendant un fonctionnement de l'appareil de cuisine (1), l'ustensile (17, 18) présentant un élément de verrouillage (57), en particulier un logement de verrou (59) conçu pour coopérer avec un verrou (61) déplaçable en va-et-vient du mécanisme formant verrou (54) actionné électriquement, ou une protubérance (60) pour un verrouillage ou une fixation mécanique du récipient mixeur (7) sur ou dans l'élément de couplage d'ustensile (15, 16).
